# EUROPEAN PATENT APPLICATION

(11) **EP 4 415 351 A1**
(43) Date of publication of application: **14.08.2024**
(21) Application number: 24155109.2
(22) Date of filing: 31.01.2024
(51) Int. Cl.: H04N 7/18, G08B 13/196, G06V 20/40, G06V 20/52

(54) **SURVEILLANCE SYSTEM**

(30) Priority: 07.02.2023 GB 202301678
(71) Applicant: Milestone Systems A/S, 2605 Brøndby (DK)
(72) Inventor: ZATVORNYTSKYI, Oleksii, 2605 Brøndby (DK); VERGMANN, Peter Posselt, 2605 Brøndby (DK)
(74) Representative: Canon Europe Limited

(57) **Abstract**

A video management system (VMS) (300, Fig. 1) comprising: - a recording server (320, Fig.1) configured for receiving and storing a plurality of data streams (311, Fig.1) and respective metadata streams (311, Fig.1), each data stream being supplied by, or associated with, respective ones of a plurality of streaming devices (100a-d, Fig.1);
- a processing unit configured to receive data via a data communication interface, and further configured to:
- responsive to a trigger event, select a streaming device (508) of the plurality of streaming devices, where the selected streaming device is associated with the trigger event,
- obtain position data associated with the selected streaming device, and
- determine a textual position description (510) based on the position data of the selected streaming device at a time associated with the trigger event, wherein the textual position description describing a geographical position in a natural human language form with a common language syntax,

and wherein the VMS is further configured to provide (515) the textual position description to one or more target user devices (460, Fig.2).

## Description

### TECHNICAL FIELD

The present disclosure generally relates to surveillance systems and optionally computer-implemented data management methods for surveillance systems.

### BACKGROUND

Modern surveillance systems, such as video surveillance systems, have evolved into highly complex and often heterogeneous systems comprising a large number of different peripheral devices and computer hardware elements that are tied together via a networked infrastructure, and controlled by means of advanced management software. One important component of modern surveillance systems is a data recording and processing system that allows data streams from one or more streaming devices to be received, stored and processed.

A video management system (VMS), also known as video management software or a video management server, is a component or sub-system of a surveillance system. The VMS typically provides various data management services, such as one or more of the following: collecting one or more data streams from one or more streaming devices, such as video streams from one or more video cameras, storing the received one or more data streams to a storage device and providing an interface, e.g. to view the received one or more live video streams and/or to access one or more stored video streams. A VMS can further be configured to aid users by automatically monitoring events from any number of surveillance devices, such as cameras, alarms, or sensors. The VMS software may further alert users to any events, potential risks, threats, or scheduled tasks.

Moreover, it is generally desirable that surveillance systems and, in particular, VMSs are versatile and can be used in different types of applications which may impose different demands or requirements to processing and displaying received data streams supplied by the one or more streaming devices. Moreover, the demands and requirements imposed in a surveillance system may change over time.

A particular challenge to video surveillance systems and the VMS subsystem is to handle data streams supplied by moving or movable, i.e. non-stationary, streaming devices during normal operation of video surveillance system. The movable streaming device may move or travel through a geographical surveillance area and/or facilities like office buildings etc.

### SUMMARY

It is an object of at least some aspect described in the present disclosure to solve one or more of the problems identified above and/or other problems associated with existing surveillance systems, or at least to provide an alternative to known systems.

In an aspect is disclosed a video management system (VMS) comprising:
- a recording server configured for receiving and storing a plurality of data streams and respective metadata streams, each data stream being supplied by, or associated with, respective ones of a plurality of streaming devices;
- a processing unit configured to receive data via a data communication interface, and further configured to:
   - responsive to a trigger event, select a streaming device of the plurality of streaming devices, where the selected streaming device is associated with the trigger event,
   - obtain position data associated with the selected streaming device, and
   - determine a textual position description based on the position data of the selected streaming device at a time associated with the trigger event,
and wherein the VMS is further configured to provide the textual position description to one or more target user devices.

The metadata stream associated with each data stream may comprise timestamps, i.e. a digital record of time. This allows for time synchronization of the data streams and metadata streams received at the VMS.

Timestamps associated with metadata "frames" and timestamps associated with data frames may be separate such that a time synchronization is necessary in order to relate the frames to each other. For example, so as to be able to determine the position of a selected device at a time associated with a trigger event. During time synchronization a given frame is related to a relevant frame from another stream, i.e. for a given data frame a relevant metadata frame is coupled to it or for a given metadata frame a relevant data frame is coupled to it. The relevant data frame may be the one having a timestamp at or before the timestamp of a given metadata frame. Likewise, the relevant metadata frame may be the one having a timestamp at or before the timestamp of a given data frame. In some instances, the relevant frame is more appropriately chosen as the frame having a timestamp that is later than the timestamp of the given frame. Thus, the relevant frame may not be the frame having a timestamp closest to the timestamp of the given frame from the other stream. For example, it may be more suitable in a given scenario to relate a given frame from one stream to a frame from another stream having a timestamp at or before the timestamp of the given frame even though the frame that is closest in time is one having a later time stamp compared to that of the given frame.

In some cases, the timestamps of the frames in the metadata stream match the timestamps of the frames in the data stream exactly. This may occur e.g. when the metadata is generated based on an analysis as is well known to a skilled person. It may also occur when the metadata and data originate from the same source, for example the same camera. However, when the data streams and the metadata streams originate from independent, although associated, sources, the frames will have entirely independent timestamps, e.g. a GPS device associated with a video camera may only be providing the position each second, whereas the associated video camera may be providing 25 video frames per second. Each streaming device may further be associated with multiple metadata streams, which may each originate from an independent, but associated, source such that the associated metadata streams may comprise multiple sets of timestamps.

Thus, the position of a selected camera at a time associated with a trigger event may be determined following a time synchronization.

In some embodiments, the trigger event associated with a first timestamp, and the determination of the textual position description is based on the position data of the selected streaming device at a timestamp that is associated with the first timestamp following a time synchronization.

The data streams may be received by the VMS as a live data stream or as a "taped" data stream, i.e. as a stream that is stored and provided to the VMS at a later time.

Metadata is data that describes and gives information about other data and may be obtained from a variety of sources. Position data is a type of metadata. The position data on the basis of which the textual position description is determined may for example be obtained from a database, or from a setting, or as metadata in a metadata stream, for example a metadata stream that is associated with a data stream. In some embodiments, the position data is obtained, entirely or partially, at the VMS as a metadata stream supplied by, or associated with, the streaming device from which the respective data stream was acquired. The position of a respective camera may e.g. be obtained from a camera-associated GPS unit or device. The position metadata may be added to the metadata stream for a respective streaming device, and may be stored as part of the metadata stream.

The data streams may be e.g. video streams, audio streams, etc. The data streams may vary significantly in size. For example, a data stream may comprise a video stream recorded continuously, or discontinuously, over a period of time. A data stream may comprise an event notification from a monitoring service notifying of an event, such as e.g. detection of motion or an alarm, such as a fire alarm, being set off.

In some embodiments, the recording server is further configured for receiving and storing the plurality of data streams with which the plurality of metadata streams are associated, respectively. The processing unit may be configured to store the plurality of data streams and respective metadata streams in a data repository, such as a video data repository, and in a metadata repository, respectively, and to retrieve the plurality of data streams and respective metadata streams from the data repository and metadata repository, respectively, as discussed in further detail below with reference to the appended drawings.

The textual position description provides the position of the selected streaming device in a textual form that is descriptive of the position. Thus, the VMS aims to provide a description of the position using common language syntax. Such a textual position description is beneficial for users who rely on text guidance, and/or on audio guidance as the textual position description is suitable for being converted to audio by text-to-speech (TTS) software.

In some embodiments, the processing unit is further configured to determine a textual position description that is provided in a natural human language form. Thus, the textual position description may be a human-readable description of a geographic position.

The textual position description may provide the position of the selected streaming device as a relative position, i.e. based on the position of one or more absolute positions, such as street address, facilities, buildings, rivers, lakes, roads, highways, etc. For example, a textual position description may be given as "Crossing of streets X and Y", "Near facility Y", "At entrance of building A", "North of building A", etc. or a combination of such descriptions. Thus, the position of the selected streaming device may be provided as one or more of, or possibly as a combination of two or more of: street address, location, location feature (i.e. a feature of the location, e.g. entrance, window, wooded area, door, fountain, square, fire hydrant, etc.), and/or location name. Location name is the name of a location, also known as a place name.

By providing the textual position description in a common language syntax (a natural human language form), which may be comprised of one or more phrase(s), clause(s) or sentence(s), it is possible for a person receiving the textual position description to semantically understand the location of the trigger event determined by the streaming device.

Determination of a textual position description may comprise reverse geocoding, i.e. the conversion of geographic coordinates, such as latitude and longitude, to a human-readable geographic location. GPS coordinates are usually provided as latitude and longitude. Thus, determination of a textual position description may comprise the mapping of geographic coordinates, or GPS coordinates, to a textual description.

The textual position description may be provided in one or more languages. The one or more languages of the textual position description may depend on a setting, e.g. due to a personal preference of the recipient/receiver of the message. For example, one recipient may prefer that the language of the textual position description is English, while another prefers that it is in Danish. Thus, the language used in the textual position description may depend on a user setting or on a determination made by a processing unit. For example, the processing unit may be configured with a default language setting, or may be configured to determine one or more suitable languages, for example depending on the position of the selected streaming device, or on the location of a target user device and/or of a user.

The textual position description may be provided as part of a notification and/or an alarm. The textual position description may be provided together with other information to the one or more target user devices.

The textual position description may be based on the trigger event. The textual position description may describe the geographical position of the trigger event.

The textual position description may be based on a determined position of the trigger event. The determined textual position description may be based on the position of the trigger event and the position of the selected streaming device associated with the trigger event.

The position of the trigger event may be determined based on the relative position with one or more streaming devices including the selected streaming device.

The textual position description may be based on GIS data.

The position of the trigger event may be based on GIS data and the position of the selected streaming device associated with the trigger event. The position of the trigger event, or the textual position description, may be based on GIS data and an area of detection of the selected streaming device comprising the trigger event.

The GIS data used in the determination of the textual position description and/or the position of the trigger event may be associated to the area of detection of the selected streaming device. That is to say that the textual position description may describe the geographical position of the trigger event based on the area of detection of the selected streaming device comprising said trigger event. The position data of the selected streaming device may be used to determine the GIS data.

The GIS data may be provided by a Geographic information system. GIS data may have multiple layers of data. GIS data may include street data and building data. For example, the GIS data may provide street names from street data, building names based on building data, etc.

A trigger event may be detected in the Field of View of a video camera, i.e. the area of detection of the streaming device. A position of the video camera may be determined and an FOV of the video camera comprising the trigger event may be determined. The positional textual description may be determined based on the position of the video camera, the FOV comprising the trigger event, data stream, and GIS data.

The textual position description may be determined based on a language model. The language model may comprise one or more inputs. The one or more inputs may be one of at least: position data on the selected streaming device; position data on one or more streaming devices within a predetermined range of the selected streaming device; position of the trigger event; and GIS data.

The language model may be trained based on GIS data of a specific geographical region. For example, it may be trained on GIS data for a specific city or a specific region comprising multiple cities, towns or villages. The textual position description may also provide a description of the trigger event together with its geographical location.

In some embodiments, the VMS further comprises means for transmission using an email and/or SMS protocol, and wherein the textual position description is transmitted as email and/or SMS using an appropriate protocol. The means for transmission may be a communication interface. The communication interface may interface with a communications network.

In some embodiments, the VMS further comprises a text-to-speech (TTS) converter configured to receive the textual position description and provide a voice message corresponding to the text of the textual position description, and wherein the VMS further comprises means for transmission of the textual position description using an audio protocol. Thus, the textual position description may be transmitted as audio.

Thus, the textual position description can advantageously be provided to one or more users that are away from the VMS and so are unable to see a message provided by the VMS on a display, such as via a GUI. A user may for example be a guard that is on guard duty, a police officer on patrol, a person driving a car, etc., all of which would benefit from receiving the position of the selected streaming device as text and/or audio. The textual position description will be provided to one or more target user devices, such as e.g. a radio device, e.g. a portable handheld radio, a car radio, etc., a mobile phone, a PDA, a laptop, etc. Receiving the textual position description as an audio message may be advantageous when the user is unable to read a text message or where it would be inconvenient to have to read a text message.

The textual position description is particularly advantageous for providing a position of a selected streaming device that is movable. The textual position description may be updated when/if the selected streaming device moves.

The textual position description may be provided to one or more target user devices based on a request, for example based on a request from a user device, or the textual position description may be pushed to a user device. The user device requesting the textual position description need not be the same as the target user device to which the textual position description is provided. The textual position description may be provided to a plurality of user devices at the same time.

In some embodiments, the processing unit is further configured to provide a spatial position description, which comprises a spatial reference, such as grid reference, or latitude and longitude, in addition to the textual position description. The TTS converter may be configured to receive the spatial position description and provide a voice message corresponding to the content of the spatial position description. Thus, the spatial position description may be transmitted as audio either together with the textual position description, or separately from the audio transmission of the textual position description.

The processing unit is responsive to a trigger event and selects a streaming device, which is associated with the trigger event. The trigger event may e.g. be one or more of: the result of a search, a user request, an event notification, a security instance. For example, if the trigger event is a search result from an image search in video streams, the selected streaming device may be the video camera, which recorded the video stream containing the searched item or incident.

In some embodiments, the processing unit is further configured to search the plurality of data streams and/or respective metadata streams in accordance with one or more search criteria to identify at least one of a target object, a target activity and/or a target incident, and the trigger event is a search result.

In some embodiments, the VMS further comprises a user interface (UI) client configured to receive a user request, and the trigger event is the user request.

In some embodiments, the VMS further comprises an event server configured to receive an event notification from a monitoring service notifying of an event, and the trigger event is the event notification.

In some embodiments, the processing unit is further configured to autonomously monitor the data streams and respective metadata streams, and to predict a security instance, and the trigger event is the security instance.

The trigger event, especially the security instance, may be determined, i.e. detected, based on one or more data streams from the streaming devices. The one or more data stream may be analysed to determine an event. For example, with video cameras, the trigger event may be determined based on analysing the video stream and/or from an associated metadata stream which may include data from on-board analytics. In another example, an audio stream may be analysed for sounds which indicated an event, i.e. trigger sounds, such as a gunshot or scream.

In another aspect is disclosed a video surveillance system comprising:
- a plurality of streaming devices in a surveillance area and configured to generate respective data streams; and
- a video management system (VMS) as disclosed herein.

The plurality of streaming devices may comprise at least one movable streaming device, such as a movable video camera, and optionally one or more stationary streaming devices according to an embodiment of the video surveillance system.

In some embodiments, the plurality of streaming devices comprises a plurality of movable video cameras. Movable streaming devices may each travel along a path or trail within the surveillance area via mounting to any suitable support structure of a vehicle, for example a motorized vehicle such as a car, a truck, a bus, a train, a motorcycle etc. The movable streaming device(s) may be moved or transported along the path or trail of the surveillance area by way of mounting on, or worn by, a person via a suitable support such as a belt etc. The one or more stationary streaming devices may be mounted on, or fixed to, various kinds of stationary structures like factory or office buildings, train stations, support structures, etc. and may be arranged at traffic roads or junctions or the like.

In another aspect is disclosed a computer-implemented data stream management method for a surveillance system, comprising steps:
a) Receive a plurality of data streams and respective metadata streams, each data stream being supplied by, or associated with, respective ones of a plurality of streaming devices;
b) responsive to a trigger event, select a streaming device of the plurality of streaming devices, where the selected streaming device is associated with the trigger event;
c) obtain position data associated with the selected streaming device;
d) determine a textual position description based on the position data of the selected streaming device at a time associated with the trigger event; and
e) provide the textual position description to one or more target user devices.

The computer-implemented data stream management method may further comprise the determined textual position description being presented in natural human language form.

The computer-implemented data stream management method may further comprise the step of: search the plurality of data streams and respective metadata streams in accordance with one or more search criteria to identify at least one of a target object, a target activity and/or a target incident, and wherein the trigger event is a search result from the search.

The computer-implemented data stream management method may further comprise the step: receive, at a UI client, a user request, and wherein the trigger event is the user request.

The computer-implemented data stream management method may further comprise the step: receive, at an event server, an event notification from a monitoring service notifying of an event, and wherein the trigger event is the event notification.

The computer-implemented data stream management method may further comprise the step: monitor autonomously the data streams and respective metadata streams to predict a security instance, and wherein the trigger event is the security instance.

The computer-implemented data stream management method may further comprise the trigger event being one or more of a search result, a user request, an event notification, and/or a security instance, as described herein.

The computer-implemented data stream management method further may further comprise that providing the textual position description to one or more target users further comprises transmitting the textual position description as email and/or SMS.

The computer-implemented data stream management method further may further comprise the step: provide a voice message corresponding to the text of the textual position description, and wherein providing the textual position description to one or more target users further comprises transmitting the textual position description as audio.

In another aspect is disclosed a video management system (VMS) comprising a processing unit comprising microprocessor executable program instructions configured to carry out one or more of the method steps disclosed herein.

A further aspect of the present invention is provided by a video management system (VMS) comprising: a recording server configured for receiving and storing a data stream and a respective metadata stream from, or associated with, a geographically movable streaming device; and a processing unit configured to receive data via a data communication interface, wherein the VMS is further configured to: responsive to a trigger event associated with the movable streaming device, obtain position data associated with the movable streaming device, and determine a textual position description based on the position data of the movable streaming device at a time associated with the trigger event, wherein the textual position description is presented in a natural human language form using a common language syntax of the geographic location associated with the determined position, and wherein the VMS is further configured to provide the textual position description to one or more target user devices.

Another aspect of the present invention is provided by a computer-implemented data management method for a surveillance system, comprising the steps of a) receiving a data stream and respective metadata stream from, or associated with, a movable streaming device; b) obtaining position data associated with the movable streaming device in response to a trigger event associated with the movable streaming device; c) determining a textual position description based on the position data of the movable streaming device at a time associated with the trigger event, wherein the textual position description is presented in a natural human language form using a common language syntax of the geographic location associated with the determined position; and d) providing the textual position description to one or more target user devices.

An aspect of the present invention is provided by a video management system (VMS) comprising: a recording server configured for receiving and storing a plurality of data streams and respective metadata streams, each data stream being supplied by, or associated with, respective ones of a plurality of streaming devices; a processing unit configured to receive data via a data communication interface, and further configured to:
- responsive to a trigger event determined in one or more of the data streams, select one or more streaming devices of the plurality of streaming devices, wherein the one or more selected streaming devices are the source of, or associated with, the one or more data stream comprising the determined trigger event,
- obtain position data associated with each of the one or more selected streaming devices, and
- determine a textual position description based on the position data associated with each of the one or more selected streaming devices at a time associated with the trigger event, wherein the textual position description describes the geographical position of the trigger event in a natural human language form with a common language syntax,
and wherein the VMS is further configured to provide the textual position description to one or more target user devices.

A further aspect of the present invention is provided by a computer-implemented data management method for a surveillance system, comprising the steps of:
a) receive a plurality of data streams and respective metadata streams, each data stream being supplied by, or associated with, respective ones of a plurality of streaming devices;
b) responsive to a trigger event determined in one or more of the data streams, select one or more streaming devices of the plurality of streaming devices, wherein the one or more selected streaming devices are the source of, or associated with, the one or more data streams comprising the determined the trigger event;
c) obtain position data associated with each of the one or more selected streaming devices;
d) determine a textual position description based on the position data associated with each of the one or more selected streaming devices at a time associated with the trigger event, wherein the textual position description describes the geographical position of the trigger event in a natural language form with a common language syntax; and
e) provide the textual position description to one or more target user devices.

An aspect of the present invention is provided by a video management system (VMS) comprising: a recording server configured for receiving and storing a plurality of video streams and respective metadata streams, each video stream being supplied by, or associated with, respective ones of a plurality of video cameras, wherein at least ; a processing unit configured to receive video data via a data communication interface, and further configured to:
- determine a trigger event within one or more of the video streams
- select one or more video cameras of the plurality of video cameras, where the selected one or more video cameras is associated with the trigger event,
- determine a position associated with at least one of the trigger event and the selected video camera, and
- determine a textual position description based on the determined position data at a time associated with the trigger event,
and wherein the VMS is further configured to provide the textual position description to one or more target user devices.

In the aspects disclosed herein, terms and features relate to the terms and features having the same name in the other aspects and therefore the descriptions and explanations of terms and features given in one aspect apply, with appropriate changes, to the other aspects. Additional aspects, embodiments, features and advantages will be made apparent from the following detailed description of embodiments and with reference to the accompanying drawings.

### BRIEF DESCRIPTION OF THE DRAWINGS

The above and other aspects will be apparent and elucidated from the embodiments described in the following with reference to the drawings in which:
FIG. 1 is a schematic block diagram of an exemplary surveillance system in accordance with the invention;
FIG. 2 illustrates a streaming device recording a data stream in an environment and transmitting the stream to a VMS according to some embodiments;
FIG. 3 illustrates in schematic form an exemplary graphical user interface of a VMS according to some embodiments;
FIG. 4 illustrates in schematic form an exemplary graphical user interface of a VMS according to some embodiments;
FIG. 5 shows a flow diagram of a computer-implemented data stream management method according to some embodiments;
FIG. 6 shows a flow diagram of a part of a computer-implemented data stream management method according to some embodiments;
FIG. 7 shows a flow diagram of a part of a computer-implemented data stream management method according to some embodiments; and
FIGS. 8A and 8B show a swim lane diagrams of a computer-implemented data stream management method according to some embodiments.

### DETAILED DESCRIPTION

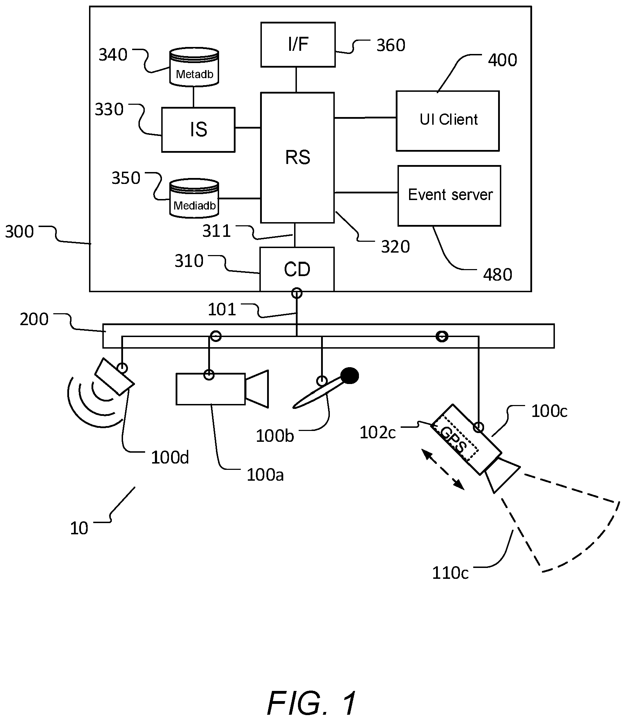

FIG. 1 is a schematic block diagram of an exemplary surveillance system 10. The surveillance system 10 comprises a plurality of streaming devices 100a, 100b, 100c, 100d communicatively connected to a video management system (VMS) 300 via respective wired or wireless communication links or connections 200. Some embodiments of the surveillance system 10 may comprise a mix of streaming devices, such as e.g. microphones 100b, motion detectors 100d, movable video cameras and stationary video cameras, for example at least one movable video camera 100c and one or more stationary video cameras 100a. Other embodiments may exclusively comprise one or more movable video camera(s) and no stationary video cameras and possibly one or more microphones 100b and/or one or more motion detectors 100d, while yet other embodiments exclusively comprise stationary video cameras and possibly one or more microphones 100b and/or motion detectors 100d. A surveillance system 10 may comprise other sensors, movable or stationary, than those depicted in fig. 1.

The stationary streaming devices, such as stationary video cameras 100a, stationary microphones 100b, and/or stationary motion detectors 100d are, when present, typically distributed across a predetermined area or space where surveillance is desired. The number and position/location of the stationary streaming devices of the video surveillance system 10 as well as the type of streaming device comprised therein may be selected based on factors such as a level of surveillance desired, a size of the surveillance area or facility and/or the complexity of the layout of the surveillance area or facility. The movable video camera(s) 100c has a Field of view (FOV) and the stationary video cameras 100a have respective FOVs (not shown). The FOV is the open, observable area of the camera in question as schematically illustrated by a pie-shaped outline 110c. The skilled person will appreciate that different types of video cameras may have different FOVs for example caused by different optical properties of camera lenses.

In the present specification, the term "movable" as a property of a video camera means the camera can be moved, i.e. is geographically dynamic, while carrying out video recording and/or live video streaming. The video recording and/or live video streaming is often carried out during active operation of the video surveillance system 10. The movable video camera is for example displaced along a certain path or trail of the surveillance area. A stationary video camera is typically fixed to a stationary, like a building wall or a pole in the surveillance area.

The movable video camera 100c may travel along a path or trail of the surveillance area via mounting to any suitable support structure of various types of vehicles for example motorized vehicles like cars, trucks, busses, trains, motorcycles etc. The movable video camera 100c may be moved along the path or trail of the surveillance area by being mounted on, or worn by, a person via a suitable support like a belt etc. The person may for example be a police officer, bus driver, fireman etc. In the latter situation the movable video camera 100c travels through the surveillance area when the person walks or runs. Alternatively, the movable video camera 100c may be transported or moved via the vehicle's travel when the person wearing the movable video camera 100c is a driver or passenger of the vehicle. The stationary video cameras 100a, 100b may be mounted on, or fixed to, various kinds of stationary structures like factory or office buildings, train stations, support structures arranged at traffic roads or junctions etc.

The movable video camera(s) may be conventional portable video camera(s) known as such in the art of video surveillance. It will be appreciated that the video surveillance system 10 typically includes a plurality of movable video cameras of the same type and/or different types. Different types of movable video cameras of the video surveillance system 10 may for example be tailored to specific operation schemes and placements, e.g. fixed to a truck or on-person fixations. The movable video cameras of different types may be configured to supply video streams of different resolution, in different formats or outputting additional metadata associated with the video stream. Examples of functions of the movable video cameras may include one or more of the following: video streaming, in particular live streaming, and/or video recording and audio streaming and/or audio recording. The video live streaming and/or video recording may be carried out in visible wavelength ranges and/or in infrared wavelength ranges, such as near-infrared wavelength ranges. The moveable video camera(s) and stationary video cameras may comprise various control functions such as pan or zoom, image processing capabilities, motion detection, etc. The respective data streams from streaming devices 100a, 100b, 100c, 100d are associated with respective metadata streams. The metadata stream may be a separate stream from the associated data stream but originating from either the same streaming device or another device mounted in an appropriate manner relative to the streaming device. The metadata stream associated with each data stream preferably includes time stamps together with corresponding position data associated with the streaming device in question. This property allows time synchronization of the data streams and metadata streams at the VMS. The respective geolocations of the stationary video cameras 100a, the microphones 100b, the motion detectors 100d, and those of the one or more movable video cameras 100c may be derived from the position data supplied by a device associated GPS unit or GPS device. The associated GPS unit or GPS device of a movable or stationary video camera may be built into the video camera as schematically illustrated by GPS device 102c of the movable video camera 100c, or may fixed to a vehicle or person carrying the movable video camera in question.

The stationary video cameras 100a, the microphones 100b, the motion detectors 100d, as well as the one or more movable video cameras 100c are often communicatively connected to the video management system (VMS) 300 as mentioned above for example connected via a local area network 200 or in any other suitable manner, e.g. via point-to-point wired and/or wireless connections, or the like. For example, any stationary streaming devices may be connected to the VMS via an Ethernet connection. Movable streaming devices, such as the one or more movable video cameras 100c may often be wirelessly connected to the VMS 300 for example through a wireless network like Wi-Fi, a 4G and/or 5G network. However, one or more movable streaming devices, such as movable video cameras 100c, may alternatively be configured to record the data stream during active operation where the movable streaming device moves in or through the surveillance area. In the latter scenario, the data stream may be transferred to, or off-loaded at, a media repository 350 of the VMS 300 at the time of return to an associated station. In the latter use case, the data stream may be offloaded at regular time intervals for example when a camera user or camera vehicle such as a bus driver or police officer returns to the station. The skilled person will understand that some exemplary video surveillance systems may include additional sensors providing sensor signals and/or media streams different from video streams, such as audio signals, radar signals, Lidar signals, etc.

The VMS 300 is preferably configured to store the received data streams in the media repository 350. The VMS 300 provides an interface 360 for accessing live data streams as well as the previously discussed added metadata, and to access data streams with respective metadata stored in the media repository 350. The interface 360 may implement different types of interfaces. For example, the interface may provide an application interface, e.g. in the form of a software development kit and/or one or more communication protocols, such as a suitable messaging protocol, e.g. SOAP, XML, etc. Accordingly, the interface may operate as a gateway to different types of systems. The VMS may be configured to implement various types of processing of received live data streams and/or stored and retrieved data streams for example object detection, object recognition, motion detection etc.

The media repository 350 may comprise a media database or other suitable storage device for storing media content. The VMS may include a user interface client (Ul client) 400, for example configured to provide a graphical user interface, displayed on a suitable user screen or screens of the VMS 300. The graphical user interface enables users to view live data streams and/or stored data streams and/or to control operation of one or more of the stationary streaming devices and/or control operation of the one or more movable streaming devices, such as movable video cameras 100c. The content and structure of data items displayed through the user interface may be configurable by the operator via control buttons etc. The user interface comprises a map component integrated in VMS. The map component is utilized to build or provide a geo-map of at least a part of the surveillance area for presentation on the user screen. The map component may be configured to provide a geo-map overview of the respective positions of the plurality of streaming devices.

The VMS 300 may be embodied as one or more software program(s) comprising respective computer executable instructions configured for execution on a suitable data processing system, e.g. by one or more server computers. The data processing system implementing the VMS is typically arranged remote from the one or more movable streaming devices as the latter often travel over a large geographical area for example through a route or trail comprising various streets, roads and facilities. The route or trail may cover a city neighbourhood or even an entire city. The data streams from the movable streaming device(s) may be transmitted to the VMS 300 over wireless public or other wireless communications networks. Alternatively, the movable streaming device(s) of the video surveillance system 10 may move in relative proximity to a locally arranged on-site VMS 300 for example in a manufacturing facility, residential or office buildings, shopping centre etc.

The VMS 300 may comprise one or more streaming device drivers 310, such as camera drivers, for providing interfaces to respective types of stationary and movable streaming devices, such as stationary or movable video cameras. Different types of streaming devices may provide their respective data streams in different formats, e.g. using different encoding schemes and/or different network protocols. Similarly, different cameras may provide different interfaces for camera control such as zoom, or pan. Accordingly, the VMS 300 may include a plurality of different device drivers, such as different camera drivers 310 configured to cooperate with respective types of streaming devices. In particular, the device drivers 310 may implement one or more suitable network protocols and/or other communications standards for transmitting data between movable and stationary streaming devices and/or other peripheral devices and data processing systems. Examples of such protocols and standards include the Open Network Video Interface Forum (ONVIF) standard and the Real Time Streaming Protocol (RTSP).

The device drivers 310 may further be configured to add one time stamp to each instance of data 101, such as each frame of a received video stream, so as to ensure that the data streams, which are stored and subsequently supplied by the VMS 300, include a uniform time stamp. The added time stamp will also be referred to as a canonical time stamp. The canonical time stamp is indicative of the time of receipt, by the VMS 300, of the respective data streams from the respective stationary and movable streaming devices. The camera drivers thus provide uniformly time-stamped input data streams 311, each time-stamped input data stream 311 corresponding to a respective one of the received data streams.

The VMS 300 comprises a recording server 320. The recording server may be embodied as a software program module executed by a suitable data processing system, e.g. by one or more server computers. The recording server receives the inputted data streams 311 originating from the respective stationary and movable streaming devices through the corresponding device drivers 310. The recording server stores the received inputted data streams in a suitable media storage device, such as a suitable media database. It will be appreciated that the media repository 350 may be part of the VMS 300 or it may be separate from, but communicatively coupled to the VMS. The media repository 350 may be implemented as any suitable mass storage device, such as one or more hard disks or the like. The storing of the received input data streams is also referred to as recording the received input data streams. The recording server may receive additional data such as the previously discussed metadata stream.

The VMS 300 may store the generated metadata in a suitable metadata repository 340, such as a suitable metadata database, which may be separate from or integrated into the media repository 350. To this end, the VMS 300 may include an index server 330. The index server may be embodied as a software program module executed by a suitable data processing system, e.g. by one or more server computers. The index server may receive metadata and store the received metadata in the metadata repository 340. The index server may further index the stored metadata so as to allow faster subsequent search and retrieval of stored metadata.

The VMS 300 may further comprise an event server 480, which is configured to receive an event notification from a monitoring service notifying of an event. An event may be e.g. a triggered alarm, the detection of a motion, etc. The event server 480 is configured to receive event notifications, such as an alarm, from a monitoring service of an event at a property being monitored. An event may be reported by any type of streaming device, for example any one or more of the microphone 100b, motion detector 100d, movable video camera 100c, and stationary video camera 100a from which the VMS 300 receives respective data streams and metadata streams. An event server 340 may be configured to pair information about an event with other data such as e.g. video or audio from the property being monitored. Further, the event server 340, or another component of the VMS, may assign a priority to an event, e.g. a fire alarm may be given a higher priority than an event recorded by a motion detector.

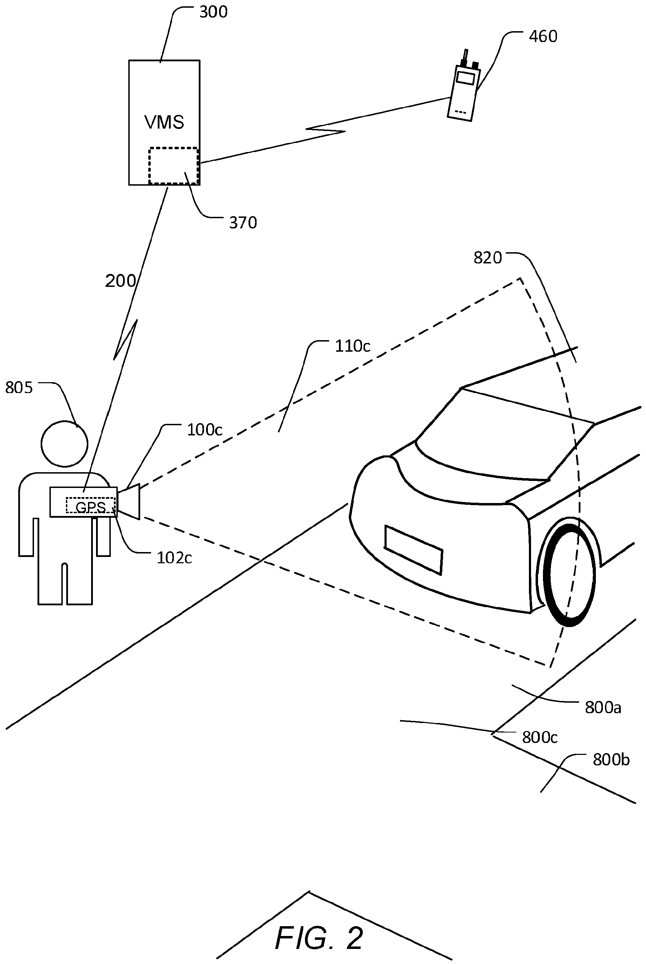

FIG. 2 illustrates a streaming device recording a data stream in an environment and transmitting the stream to a VMS 300 according to some embodiments. The streaming device is a mobile video camera 100c, which is movable by being attached to a person 805 moving around in the environment. A GPS device 102c comprised within the movable video camera 100c logs a position of the movable video camera 100c, while the video camera 100c is recording and moving around. Thus, the movable video camera 100c generates a video stream, which may also comprise audio, and the associated device, the GPS 102c, generates a metadata stream that is associated with the video, and possibly audio, stream.

The video camera 100c has a field-of-view (FOV) 110c illustrated schematically by a dashed pie shape. Within the FOV 110c of the movable video camera 100c is part of a road 800a, which is connected to another road 800b at a T-junction 800c, and of a car 820. The video stream recorded by the movable video camera 100c thus comprises video frames of at least part of the road 800 and car 820.

The video stream is uploaded to a VMS 300 either as a live video stream or as a stream that has been stored, for example stored on storage media comprised in the video camera 100c, and then transmitted to the VMS 300. The VMS 300 may therefore further comprise a data communications interface 370, e.g. a network adaptor, a GSM module or another suitable circuit for communicating via a cellular communications network or via another wireless communications technology. It will be appreciated that the VMS 300 may include a wired data communications interface instead of or in addition to a wireless communication interface. The VMS 300 may receive data from the plurality of streaming devices and/or associated devices via one or more nodes of a communications network.

When a trigger event related to the data recorded by the movable video camera 100c is identified by the VMS, a processing unit within the VMS obtains position data associated with the movable video camera 100c. The obtained position data comprises position data for a time, such as a timestamp or time interval, associated with the trigger event. In the embodiment shown in fig. 2, the position data may be provided to the VMS by the GPS device 102c comprised within the movable video camera 100c.

The trigger event could be e.g. the identification of the number plate on the car 820, or e.g. some other form of identification of the car 820, for example related to the colour, type or model of car.

Based on the obtained position data, a textual position description is determined, which provides the position of the selected streaming device in a textual form that is descriptive of the position. In the example shown in fig. 2, the textual position description could be e.g.: "Near T junction of street A and street B", where street A and B are the roads 800a, 800b.

The textual position description is provided to one or more target user devices, such as user device 460. The textual position description may be transmitted to the one or more target user devices via the data communication interface 370 and may be transmitted e.g. as text, and/or as audio following processing by TTS software. If the textual position description is provided to a plurality of target user devices, a respective device may receive the textual position description as a text message, while another receives the textual position description as an audio message. The user device 460 may e.g. be a mobile that is configured to receive text messages, for example to receive text messages via GSM, GPRS or over an RF channel, etc. The mobile 460 may comprise a text-to-speech (TTS) converter, which can convert a transmitted text message to an audible form. Alternatively, or additionally, the VMS, after determining the textual position description, may convert the text form using a text-to-speech (TTS) converter and provide the textual position description to the user device 460 using an audio transmission protocol.

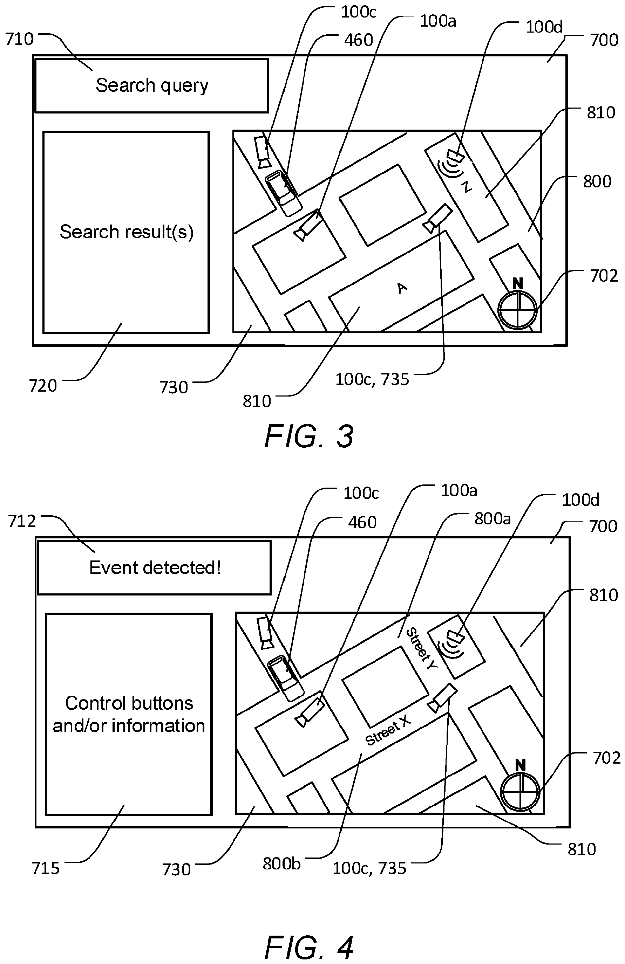

FIG. 3 illustrates in schematic form an exemplary graphical user interface of a VMS according to some embodiments. The GUI comprises a number of frames 710, 720, 730, wherein information is presented to a user.

The GUI presents the user with a frame showing a geo-map 730 of a geographical area presenting an overview of roads 800, buildings 810, and respective positions of a plurality of streaming devices 100a, 100c, 100d within the area to a user. In the example shown in fig. 3, the geo-map illustrates the position of a stationary video camera 100a, a motion detector 100d, and two movable video cameras 100c using representative icons.

A search query frame 710 allows a user to provide a search string, the content of which is transmitted to a VMS via a User Interface (Ul) client in a suitable form. The search string is then used by the VMS to search through some or all of the data available to the VMS. The one or more search results provided by the VMS in response to the search query are transmitted in a suitable form to the display on which the GUI is presented. The search result(s) may be conveyed to a user as a list of streaming devices in a suitable frame for presenting the one or more search results 720.In addition to, or instead of, presenting the user with a list of streaming devices, the search results may be illustrated to a user in the geo-map 730.

The result of a search query may be identified by the VMS as a trigger event, causing the VMS to select a streaming device 735 associated with the trigger event. The GUI may continue to show streaming devices in the geo-map other than the selected device. The geo-map may zoom to show the area near the selected streaming device 735 in greater detail. The direct display on the geo-map of the positions of streaming devices provides the user with a fast and intuitive overview of the area where the search was conducted. This display scheme improves the user's awareness and decision-making, for example as to possible other areas that should be investigated or other streaming devices that may be of relevance, thus reducing the cognitive load on the user.

The icons associated with each streaming device may be configured as or associated with one or more user-activatable buttons, where the activation of a button may provide the user with various functionalities in the GUI 700, or where the activation of a button may select the respective streaming device. Thus, the activation of a button may be an example of the selection of a streaming device due to a user request.

The position of the selected streaming device 735 is provided to a user device 460, in the example a user device, which is located within a car that is also shown in the geo-map with a representative icon. The position of the selected streaming device 735 is provided as a textual position description as described herein. In the example of fig. 3, the selected streaming device 735 is located near building A and building Z (reference numbers 810), and therefore the textual position description may be given as e.g. "On the street in-between buildings A and Z".

The skilled person will appreciate that textual position description provides the information in an intuitive manner to a user, which is especially useful for a user who do not have a display such as the one showing the geo-map in view.

FIG. 4 illustrates in schematic form an exemplary graphical user interface of a VMS according to some embodiments. The GUI 700 shown in FIG. 4 is similar to that shown in FIG. 3 except for the differences described below.

In the example in fig. 4, the GUI comprises a notification frame 712, wherein the user is presented with a notification, for example the notification of an event or of a security instance being identified. The notification may be identified by the VMS as a trigger event in response to which the VMS selects an associated streaming device 735.

As described in connection with fig. 3, the position of the selected streaming device 735 is provided to a user device 460, in the example a user device, which is located within a car that is also shown in the geo-map with a representative icon. The position of the selected streaming device 735 is provided as a textual position description as described herein. In the example of fig. 4, the selected streaming device 735 is located near the crossing of street Y 800a and street X 800b, and therefore the textual position description may be given as e.g. "At the crossing of street Y and street X".

Further, the GUI may comprise a frame presenting control buttons and/or information and/or playback of data for the user 715. For example, some or all of the data stream available from a streaming device, for example from a selected streaming device may be displayed in the frame 715. For example, a video frame or a video stream from a camera may be displayed in the GUI frame 715 for that purpose. Alternatively, or additionally, audio may be played back and controls for the audio playback may be displayed in the frame 715.

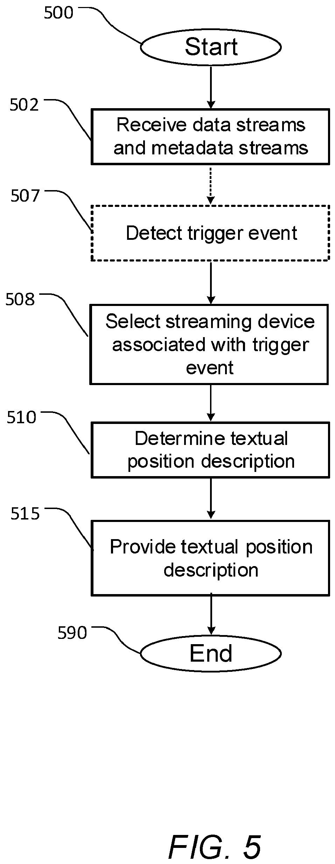

FIG. 5 shows a flow diagram of a computer-implemented data stream management method according to some embodiments.

In step 502, a video management system (VMS) receives a plurality of metadata streams associated with a plurality of data streams, respectively. Each data stream is supplied by, or associated with, respective ones of a plurality of streaming devices. Each of the metadata streams may comprise position data for respective ones of the streaming device. Alternatively, or additionally, position data may be obtained from other sources. For example, the VMS may retrieve the position data from a repository, such as a local or a remote repository. The position data comprises the position of each streaming device, for example as geographic coordinates.

In optional step 507, a processing unit comprised in the VMS may identify/detect a trigger event, as described herein.

In step 508, a processing unit comprised in the video management system selects a streaming device associated with a trigger event, which may be the trigger event identified in step 507.

In step 510, the processing unit determines a textual position description based on the position data of the selected streaming device at a time associated with the trigger event.

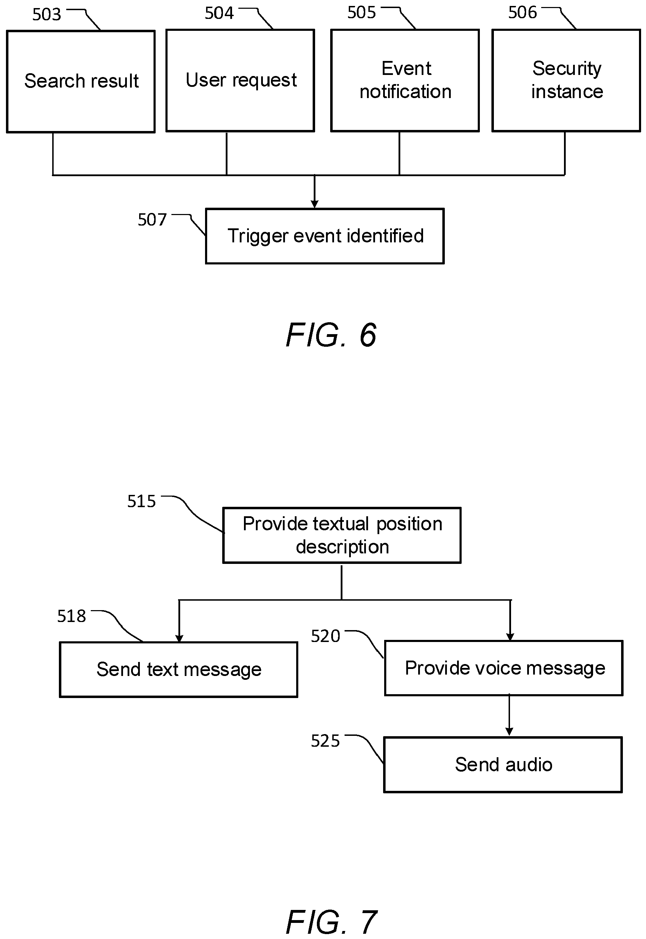

In step 515, the VMS provides the determined textual position description to one or more target user devices, see also fig. 7.

FIG. 6 shows a flow diagram of a part of a computer-implemented data stream management method according to some embodiments.

A processing unit within a VMS is responsive to a trigger event and selects a streaming device associated with the trigger event.

The process may comprise a method step 507 in which the trigger event is identified or detected. The input from which the trigger event is identified/detected may be provided to the VMS, such as a user request or an event notification, or be the result of an internal process within the VMS, such as a search result or the detection of a security instance, or a combination of the above.

Fig. 6 illustrates the mentioned input leading to a trigger event. The trigger event may e.g. be one or more of: the result of a search 503, a user request 504, an event notification 505, and/or a security instance 506.

In some embodiments, the processing unit is further configured to search the plurality of data streams and/or respective metadata streams in accordance with one or more search criteria to identify at least one of a target object, a target activity and/or a target incident, and the trigger event is a search result.

In some embodiments, the VMS further comprises a user interface (UI) client configured to receive a user request, and the trigger event is the user request.

In some embodiments, the VMS further comprises an event server configured to receive an event notification from a monitoring service notifying of an event, and the trigger event is the event notification.

In some embodiments, the processing unit is further configured to autonomously monitor the data streams and respective metadata streams, and to predict a security instance, and the trigger event is the security instance.

FIG. 7 shows a flow diagram of a part of a computer-implemented data stream management method according to some embodiments.

In step 515, the VMS provides a determined textual position description to one or more target user devices as described herein. The textual position description provides the position of a selected streaming device in a textual form that is descriptive of the position. The aim is to provide a description of the position using common language syntax. Such a textual position description is beneficial for users who rely on text guidance, and/or on audio guidance as the textual position description is highly suitable for being converted to audio by text-to-speech (TTS) software.

In step 518, the VMS comprise means for transmission using an email and/or an SMS protocol, and the textual position description is transmitted as email and/or SMS using the appropriate protocol.

Additionally, or alternatively, in step 520, the VMS comprises a text-to-speech (TTS) converter configured to receive the textual position description and provide a voice message corresponding to the text of the textual position description.

In step 525, the VMS transmits the textual position description is transmitted as audio using an appropriate protocol.

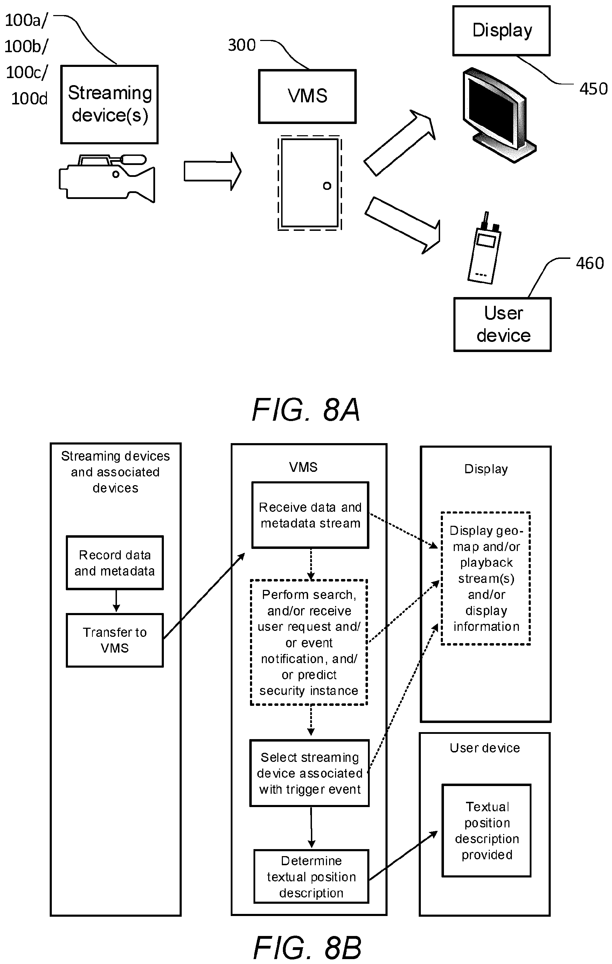

FIGS. 8A and 8B show swim lane diagrams of a computer-implemented data stream management method according to some embodiments. The diagrams illustrate the sharing of data to and from the VMS.

In FIG. 8A is illustrated how a plurality of streaming devices 100a, 100b, 100c, 100d and associated devices, e.g. a GPS device, generate respective data streams and metadata streams, possibly bound to timestamps. The data streams may for example comprise one or more of: video stream(s) from movable and/or stationary cameras, audio stream(s) from movable and/or stationary microphones, data stream(s) from any of a variety of monitoring devices, such as motion detectors, alarms, etc.

The data streams and metadata streams are provided to a VMS 300 as disclosed herein. Each streaming device of the plurality of streaming devices may comprise, or be associated with, a position detecting device configured to provide position metadata related to each of the respective data streams.

The VMS 300 may comprise a User Interface (Ul) client, which provides the necessary instructions for display of a Graphical User Interface (GUI) on a display 450 receiving data from the Ul client.

The VMS 300 comprises means for transmission of a textual position description to a user device 460.

The VMS 300 may act as a subsystem within a video surveillance system.

In FIG. 8B is illustrated in detail how the VMS 300 receives and shares data. Each column shown corresponds to the elements shown and described in connection with FIG. 8A.

A plurality of streaming devices 100a, 100b, 100c, 100d record data streams. Together with metadata streams generated by components within each streaming device or by one or more associated devices, the data streams are transferred to the VMS 300.

The VMS receives the data and metadata streams and, in response to a trigger event, selects a streaming device out of the plurality of streaming devices, where the selected streaming device is associated with the trigger event. The VMS then determines a textual position description based on the position data of the selected streaming device at a time associated with the trigger event.

A processing unit comprised in the VMS may be configured to perform a search and/or to receive a user request and/or to receive an event notification and/or to predict a security instance. The trigger event may be a result from the search and/or the user request and/or the event notification and/or the security instance.

The data streams may be played back in a GUI on a display 450 connected to the VMS 300, see also FIGS. 3 and 4. In the GUI may further be displayed information, such as information relating to one or more of the data streams, e.g. the data stream originating from the selected streaming device. Other information that may be presented to a user of the VMS on a display connected to the VMS is information relating to the trigger event; For example one or more search strings, one or more user requests, one or more event notifications and/or one or more predicted security instances.

The determined textual position description is provided to one or more target user devices 460, for example by being transmitted to a user device 460.

In other embodiments, the textual position description may be used to describe the position of the trigger event. The geographical position of an object which has triggered a motion detector, or an object which was the result of a search, may be described in a natural language form with a common language syntax so that it is readily and intuitively understandable.

In an explanatory example, a video camera may have a field of view for a road junction, the video camera being located on one side of the junction at the corner of road X and road Y. A trigger event is determined, for example the trigger event is a search result, in this case a person with a red cap. The person in the red cap being on the side of the junction opposite the video camera, in front of the post office on the corner of road Z and road X.

The VMS determines a textual position description to describe the geographical position, i.e. location, of the trigger event based on the position of the video camera. Preferably, the textual position description will describe the geographic position of the trigger event, i.e. the subject of the trigger event, in this case the person in a red hat. The position of the video camera may be determined, for example by using data from an onboard GPS module, or the preconfigured camera settings.

The textual position description is determined based on the position of the video camera, GIS data associated with the position of video camera, and the trigger event. For example, providing the position of the video camera, at least a portion of the video stream comprising the trigger event, and GIS data to a language model trained to generate a textual position description. In another example, the textual position description may be based on an imperative, e.g. rules-based, process. The GIS data may be used to provide information related to the area including street data, address data, building data, etc. The GIS data, preferably from a GIS system, may be based on the position data determined for the video camera. In this example, the GIS data provides additional contextual data which can be used to supplement textual position description, e.g. "the red-hatted person is by the post office on the corner of road Z and road X at the junction of road X, road Y and road Z".

The video data comprising the trigger event may be used to identify additional relevant features or elements which may be used to further supplement determinations. For example, video data may be analysed to identify objects whose position may be based on the GIS data.

### LIST OF REFERENCES

- 10: Video management system
- 100a: Stationary video camera(s)
- 100b: Microphone (s)
- 100c: Movable video camera(s)
- 100d: Monitoring service(s)
- 101: Instance of data
- 102c: GPS device
- 110c: FOV of movable video camera
- 200: Wired or wireless communication links/connections
- 300: VMS
- 310: Camera drivers (CD)
- 311: Inputted video streams
- 320: Recording server (RS)
- 330: Index server (IS)
- 340: Metadata repository (metadb)
- 350: Media repository (mediadb)
- 360: Interface
- 370: Data communications interface
- 400: UI Client
- 460: User device
- 480: Event server
- 500-590: Method steps
- 700: GUI
- 702: Compass
- 710: Search query frame
- 712: Notification frame
- 715: Frame with control buttons and/or information and/or playback
- 720: Frame with search results
- 730: Frame with geo-map
- 735: Selected camera
- 800a, 800b: Road
- 800c: T junction
- 805: Person
- 810: Building
- 820: Car
- 840: Target user device
- A: Building A
- Z: Facility/landmark Z

## Claims

1. A video management system (VMS) (10) comprising:
- a recording server (320) configured for receiving and storing a plurality of data streams (311) and respective metadata streams (311), each data stream being supplied by, or associated with, respective ones of a plurality of streaming devices (100a-d);
- a processing unit configured to receive data via a data communication interface (310), and further configured to:
- responsive to a trigger event, select a streaming device (508) of the plurality of streaming devices, where the selected streaming device is associated with the trigger event,
- obtain position data associated with the selected streaming device, and
- determine a textual position description (510) based on the position data of the selected streaming device at a time associated with the trigger event, wherein the textual position description describing a geographical position in a natural human language form with a common language syntax,
and wherein the VMS is further configured to provide (515) the textual position description to one or more target user devices (460).

2. A video management system (VMS) (10) according to claim 1, wherein the processing unit is further configured to perform one of:
- search the plurality of data streams and respective metadata streams in accordance with one or more search criteria to identify at least one of a target object, a target activity and/or a target incident, and wherein the trigger event is a search result (503); or
- autonomously monitor the data streams and respective metadata streams, and to predict a security instance, and wherein the trigger event is the security instance (506).

3. A video management system (VMS) (10) according to claim 1, wherein the VMS further comprises one of:
- a user interface (UI) client (400) configured to receive a user request, and wherein the trigger event is the user request (504); or
- an event server (480) configured to receive an event notification from a monitoring service notifying of an event, and wherein the trigger event is the event notification (505).

4. A video management system (VMS) (10) according to any of the previous claims, wherein the VMS further comprises at least one of:
- a transmission means (370) for transmission using an email and/or SMS protocol, and wherein the textual position description is transmitted as email and/or SMS; and
- a text-to-speech (TTS) converter, which is configured to receive the textual position description and provide a voice message corresponding to the text of the textual position description, and wherein the VMS further comprises means for transmission of the textual position description using an audio protocol.

5. A video management system (VMS) (10) according to any of the previous claims, wherein the textual position description is further based on at least one of the trigger event and GIS data of an area associated with the position of the selected streaming device.

6. A video surveillance system comprising:
- a plurality of streaming devices (100a-d) in a surveillance area and configured to generate respective data streams (311); and
- a video management system (VMS) (10) according to any of claims 1-5.

7. A computer-implemented data management method for a surveillance system, comprising steps:
a) receive (502) a plurality of data streams (311) and respective metadata streams, each data stream being supplied by, or associated with, respective ones of a plurality of streaming devices (100a-d);
b) responsive to a trigger event, select a streaming device (508) of the plurality of streaming devices, where the selected streaming device is associated with the trigger event;
c) obtain position data associated with the selected streaming device;
d) determine a textual position description (510) based on the position data of the selected streaming device at a time associated with the trigger event, the textual position description describing a geographical position in a natural language form with a common language syntax; and
e) provide the textual position description (515) to one or more target user devices (460).

8. A computer-implemented data management method according to claim 7, further comprising one of the steps of:
- search the plurality of data streams and respective metadata streams in accordance with one or more search criteria to identify at least one of a target object, a target activity and/or a target incident, and wherein the trigger event is a search result from the search (503);
- receive, at a UI client (400), a user request, and wherein the trigger event is the user request (504);
- receive, at an event server (480), an event notification from a monitoring service notifying of an event, and wherein the trigger event is the event notification (505); or
- monitor autonomously the data streams (311) and respective metadata streams to predict a security instance, and wherein the trigger event is the security instance (506).

9. A computer-implemented data management method according to claim 8, wherein providing the textual position description (515) to one or more target users (460) further comprises transmitting the textual position description as email and/or SMS (518).

10. A computer-implemented data management method according to claim 8 or claim 9, further comprising the step: provide a voice message corresponding to the text of the textual position description, and wherein providing the textual position description to one or more target user devices further comprises transmitting, to the target user device (460), the textual position description as audio (525).

11. A video management system (VMS) comprising a processing unit comprising microprocessor executable program instructions configured to carry out one or more of method steps of claims 8-10.

12. A video management system (VMS) (10) comprising: a recording server (320) configured for receiving and storing a plurality of data streams (311) and respective metadata streams, each data stream being supplied by, or associated with, respective ones of a plurality of streaming devices (100a-d); a processing unit configured to receive data via a data communication interface (310), and further configured to:
- responsive to a trigger event determined in one or more of the data streams (507), select one or more streaming devices (508) of the plurality of streaming devices, wherein the one or more selected streaming devices are the source of the one or more data stream comprising the determined trigger event,
- obtain position data associated with each of the one or more selected streaming devices, and
- determine a textual position description (510) based on the position data associated with each of the one or more selected streaming devices at a time associated with the trigger event, wherein the textual position description describes the geographical position of the trigger event in a natural human language from with a common language syntax,
and wherein the VMS is further configured to provide the textual position description (515) to one or more target user devices (460).

13. A computer-implemented data management method for a surveillance system, comprising steps:
a) receive (502) a plurality of data streams (311) and respective metadata streams, each data stream being supplied by, or associated with, respective ones of a plurality of streaming devices (100a-d));
b) responsive to a trigger event determined in one or more of the data streams (507), select one or more streaming devices (508) of the plurality of streaming devices, wherein the one or more selected streaming devices are the source of, or associated with, the one or more data streams comprising the determined the trigger event;
c) obtain position data associated with each of the one or more selected streaming devices;
d) determine a textual position description (510) based on the position data associated with each of the one or more selected streaming devices at a time associated with the trigger event, wherein the textual position description describes the geographical position of the trigger event in a natural language form with a common language syntax; and
e) provide (515) the textual position description to one or more target user devices (460).
